Europäisches Patentamt

European Patent Office

Office européen des brevets

(19)

(11) Publication number: 0 379 824
A1

## (12) EUROPEAN PATENT APPLICATION

(21) Application number: 89420503.8

(22) Date of filing: 20.12.89

(51) Int. Cl.5: C08L 67/02, //(C08L67/02, 67:02)

(30) Priority: 23.12.88 US 289348

(43) Date of publication of application:
01.08.90 Bulletin 90/31

(84) Designated Contracting States:
ES GR

(71) Applicant: EASTMAN KODAK COMPANY
343 State Street
Rochester, New York 14650(US)

(72) Inventor: Morris, John Craft c/o EASTMAN
KODAK COMPANY
Patent Department 343 State Street
Rochester New York 14650(US)
Inventor: Jackson, Winston Jerome Jr.
EASTMAN KODAK COMPANY
Patent Department 343 State Street
Rochester New York 14650(US)

(74) Representative: Parent, Yves et al
Kodak-Pathé Département Brevets et
Licences CRT 60/1 -Zone Industrielle
F-71102 Chalon-sur-Saône Cédex(FR)

(54) Blends of poly(ethylene terephthalate) and 4,4'-biphenyldicarboxylic acid polyesters.

(57) Disclosed are blends of about 99 to about 10 weight % of poly(ethylene terephthalate) and about 1 to about 90 weight % of a polyester from 4,4'-biphenyldicarboxylic acid and at least one non-branched, aliphatic glycol having 2 to 6 carbon atoms. The blends have improved gas barrier and chemical resistance properties.

EP 0 379 824 A1

# BLENDS OF POLY(ETHYLENE TEREPHTHALATE) AND 4,4'-BIPHENYLDICARBOXYLIC ACID POLYESTERS

## Field of Invention

The present invention is directed to blends of poly(ethylene terephthalate) and polyester from 4,4'-biphenyldicarboxylic acid and at least one aliphatic glycol. The blends have improved gas barrier and chemical resistance properties.

## Background of the Invention

Polyesters of 4,4'-biphenyldicarboxylic acid (BDA) and certain aliphatic glycols have been known in the art for decades. The homopolymers based on BDA are described as very crystalline (see U.S. Patent 2,976,266, column 2, line 72, through column 3, line 1) and often are modified with other glycols to lower the polymer melting point. The glycols most often used are branched, aliphatic glycols such as 2,2-dimethyl-1,3-propanediol or polyether glycols such as polyethylene glycols or polytetramethylene glycols (U.S. Patent 3,261,812) or aliphatic-aromatic glycols such as p-xylene glycol (U.S. Patent 3,008,932). One other method for lowering the melting point of the copolyesters is to reduce the biphenyldicarboxylic acid modifier content of the polymers by the addition of another aromatic dicarboxylic acid modifier such as terephthalic acid (U.S. Patent 4,082,731).

Specifically, homopolyesters of 4,4'-biphenyldicarboxylic acid and certain aliphatic glycols are disclosed in journal literature. Homopolyesters of 4,4'-biphenyldicarboxylic acid and ethylene glycol, 1,4-butanediol, and 1,6-hexanediol are disclosed by Meurisse et al., in the British Polymer Journal, Volume 13, page 57 (1981) (Table 1). Jackson and Morris include a review of homopolyesters from 4,4'-biphenyldicarboxylic acid and various aliphatic glycols in the Journal of Applied Polymer Science, Applied Polymer Symposia, 41, 307-326 (1985). Krigbaum et al., disclose relatively low molecular weight homopolyesters from 4,4'-biphenyldicarboxylic acid and various aliphatic glycols in the Journal of Applied Polymer Science, Polymer Letters Edition, 20, 109-115 (1982). Low molecular weight homopolyesters of 4,4'-biphenyldicarboxylic acid are also disclosed by Wanatabe et al., Macromolecules, 21(1), p. 278-280 (1988), and Krigbaum et al., Polymer, 24(10), p. 1299-1307 (1983). Jpn. Kokai Tokkyo Koho JP 61,236,821 [86,236,821] (1986) also discloses low molecular weight polyesters from 4,4'-biphenyldicarboxylic acid and 1,4-butanediol prepared below their melting temperatures in a nonvolatile liquid. Polyesters of 1,6-hexanediol and 4,4'-biphenyldicarboxylic acid are disclosed in Kobunshi Ronbunshu, Vol. 44(12), 983-986 (December 1987) having limiting viscosity number of about 0.31.

U.S. 3,842,040 and U.S. 3,842,041 disclose the homopolyester of 4,4'-biphenyldicarboxylic acid and ethylene glycol.

Copolyesters of 4,4'-biphenyldicarboxylic acid (BDA) and certain aliphatic glycols are disclosed and ethylene glycol (EG), 1,4-butanediol (BD), 1,6-hexanediol (HD) are specifically disclosed in column 2, line 70 of U.S. 2,976,266 in a general listing along with other aliphatic glycols useful in this disclosed invention. However, copolyesters of BDA and linear, non-branched glycols are not specifically disclosed.

U.S. 4,742,151 discloses ultra-high-molecular weight polyesters prepared from aromatic dicarboxylic acids and alkylene glycols containing from 2 to 6 carbons having an intrinsic viscosity greater than 1.5. 4,4'-Biphenyldicarboxylic acid is disclosed in a list of dicarboxylic acids useful in the disclosed invention. Blends of these polymers with other polyesters are not disclosed.

German Offenlegungsschrift, DE 1935252, discloses polyesters of two aromatic dicarboxylic acids which include 10 to 50 mol % 4,4-biphenyldicarboxylic acid, 50 to 90 mol % of terephthalic acid and the two glycols ethylene glycol and 1,4-cyclohexanedimethanol.

Japanese patent, Kokai Tokkyo Koho JP 57/198726 discloses copolyesters containing 25 to 80 mol % 4,4'-biphenyldicarboxylic acid with various aliphatic glycols and aromatic dicarboxylic acids.

Heretofore, blends of PET and polyesters from 4,4'-biphenyldicarboxylic acid and at least one non-branched, aliphatic glycol having 2 to 6 carbon atoms have been unknown.

## Summary of the Invention

The present invention is directed to a polymer blend comprising
(A) about 99 to about 10 weight % of poly(ethylene terephthalate) having an inherent viscosity of greater than or equal to about 0.4 determined at 25° C in 25/35/40 (wt./wt./wt.) phenol/tetrachloroethane/p-chlorophenol at a concentration of 0.1 gram (g)/100 milliliters (mL), and

(B) about 1 to about 90 weight % of a polyester comprising repeating units of 4,4′-biphenyldicarboxylic acid and at least one non-branched, aliphatic glycol having 2 to 6 carbon atoms wherein said polyester has an inherent viscosity of greater than or equal to about 0.2 determined at 25° C in 25/35/40 (wt./wt./wt.) phenol/tetrachloroethane/p-chlorophenol at a concentration of 0.1 g/100 mL.

A preferred polymer blend of the present invention comprises a polymer blend comprising

(A) about 99 to about 10 weight % of poly(ethylene terephthalate) having an inherent viscosity of greater than or equal to about 0.4 determined at 25° C in 25/35/40 (wt./wt./wt.) phenol/tetrachloroethane/p-chlorophenol at a concentration of 0.1 g/100 mL, and

(B) about 1 to about 90 weight % of a homopolyester comprising of repeating units of 4,4′-biphenyldicarboxylic acid and diethylene glycol or 1,6-hexanediol, wherein said homopolyester has an inherent viscosity of greater than or equal to about 0.6 determined at 25° C in 25/35/40 (wt./wt./wt.) phenol/tetrachloroethane/p-chlorophenol at a concentration of 0.1 g/100 mL.

## Detailed Description of the Invention

The prior art discloses molding, spinning, and extrusion into film as viable processes for shaping the individual polyesters in the blend of this invention. Oriented or shaped objects from blends of poly(ethylene terephthalate) (PET) and BDA homopolyesters and copolyesters are not disclosed.

The blends of this invention provide a way of reducing the gas barrier properties of poly(ethylene terephthalate) which has begun to find wide commercial acceptance in food packaging and other miscellaneous applications. We have found, for example, that it is very difficult or not even possible to biaxially orient on a T.M. Long film stretcher homopolyesters or copolyesters prepared from BDA and one or more aliphatic, non-branched glycols of the art. Generally, this is because the polymers are highly anisotropic and/or highly crystalline. Film extruded from a die is often strong only in the direction of film extrusion. Anisotropy present in the extruded films can cause the films to crack or tear along the film extrusion direction as the film exits the die. The brittle character of the extruded films can be caused by the highly crystalline nature of many of the BDA polyester films. It is usually not possible to prepare completely amorphous films by quenching films of many of the BDA homopolyesters of the art as is typical for polyesters such as poly(ethylene terephthalate). Hence, when attempts are made to reheat extruded film of the neat BDA polyester prior to biaxial orientation, the films typically crystallize even more, preventing further extension of the polymer chains during biaxial orientation. The films often tear when stretched 200% to 300% in a manner similar to PET and will not orient.

We have found that by blending these BDA polymers with PET, we are able to extrude tough films that are biaxially orientable. The presence of as little as 1 weight % of the BDA polyesters in PET acts to reduce the carbon dioxide transmission rate by about 15%. Generally, raising the BDA polyester content to 50 weight % reduces the carbon dioxide transmission rate of PET about one half. The ability to biaxially orient the blends will allow one to use commercial stretch blow techniques for the manufacture of containers with superior gas barrier properties. For example, a 70/30 PET/(BDA)(DEG) blend (that is a blend of 30 weight % PET and 70 weight % of a (BDA)(DEG) homopolyester) would have about one half the carbon dioxide gas transmission rate of unmodified PET. One might be expected to prepare a carbonated beverage container from the blend which would have about twice the shelf life of the unmodified stretch blow molded carbonated beverage container prepared from unmodified PET.

In the polymer blend of the present invention it is preferred that the weight % of component (A) is about 10 to 90, and the weight % of component (B) is about 90 to about 10.

It is also preferred that component (B) is a homopolyester of 4,4′-biphenyldicarboxylic acid and a glycol having 2 to 6 carbon atoms, or a copolyester of 4,4′-biphenyldicarboxylic acid and two glycols having 2 to 6 carbon atoms.

It is preferred that the aliphatic glycol of component (B) is 1,6-hexanediol, 1,4-butanediol, 1,3-propanediol, or 1,5-pentanediol.

The PET portion of the blends (i.e., component (A)) suitable for blending with the BDA polyester (i.e., component (B)) should have inherent viscosity (I.V.) of at least about 0.4, but preferably about 0.6 or more. The PET portion of the blend may also be modified with up to about 30 mol % of other glycols containing 2 to 16 carbon atoms or other aromatic acids having up to 16 carbon atoms. Examples of suitable dicarboxylic acid modifiers include aliphatic dicarboxylic acids such as malonic, succinic, glutaric, adipic, pimelic, azelaic, suberic, sebacic, and dodecanedicarboxylic acids and aromatic dicarboxylic acids such as isophthalic acid, 4,4'-biphenyldicarboxylic acid, trans-4,4'-stilbenedicarboxylic acid, 2,6-naphthalenedicarboxylic acid, 2-chloroterephthalic acid, and 2,5-dichloroterephthalic acid.

The glycol portion of the PET may be modified with various glycols which include 1,3-propanediol, 2,2-dimethyl-1,3-propanediol, 1,4-butanediol, 1,5-pentanediol, 1,6-hexanediol, p-xylenediol, and 1,3- or 1,4-cyclohexanedimethanol (trans and/or cis).

The BDA homopolyester and copolyester portion of the blends (i.e., component (B)) may be modified with up to about 30 mol % of other aromatic dicarboxylic acids having up to 20 carbon atoms such as terephthalic acid, 2-chloroterephthalic acid, trans-4,4'-stilbenedicarboxylic acid, 2,6-naphthalenedicarboxylic acid, and isophthalic acid so long as the blends substantially retain their improved gas barrier properties. The BDA polyesters should have inherent viscosities of at least about 0.2, but preferably, at least about 0.6 or even about 1.0 or more.

It is preferred that component (B) is modified with about 0 to about 20 mol % of said second modifier.

When the polymer blend of the present invention is in the form of an extruded film, it is preferred that said extruded film has a carbon dioxide permeability of less than or equal to 55 cc-mil/100 in$^2$-24 hours-atm.

Other more specific polymer blends of the present invention include:

(1) wherein the glycol component of component (B) comprises about 30 to 95 mol % 1,6-hexanediol, and about 5 to 70 mol % ethylene glycol, and

(2) wherein the glycol component of component (B) comprises about 5 to 95 mol % 1,4-butanediol and 5 to 95 mol % 1,6-hexanediol.

The following examples are to illustrate the invention but should not be interpreted as a limitation thereon.

The inherent viscosities of the polyesters are determined in 25/35/40 phenol/tetrachloroethane/p-chlorophenol at 25°C at concentration of 0.1 g/100 mL. The polyesters are ground, dry-blended, dried at 100°C, and extruded and pelletized on a Werner-Pfleiderer extruder or on a 3/4-in. Brabender extruder at 240° to 300°C. The blends are redried at 100°C and extruded into film that is 20-mil thick and about 6 inches (in.) wide. The films are biaxially oriented on a T.M. Long film stretcher and submitted for gas permeability testing. The oxygen permeability is determined on a Mocon Model 1000 or Model 10/50 oxygen permeability tester at 30°C and 68% relative humidity and the carbon dioxide permeability is determined on a Mocon Permatran C IV permeability tester at 0% relative humidity.

EXAMPLE 1

This example illustrates the preparation of the homopolyester consisting of 100 mol % 4,4'-biphenyl dicarboxylic acid units and 100 mol % 1,6-hexanediol units.

A mixture of 162.0 g (0.60 mol) dimethyl 4,4'-biphenyldicarboxylate, 85.0 g (0.72 mol) 1,6-hexanediol, and 0.14 g titanium tetraisopropoxide is placed in a 1-L flask equipped with an inlet for nitrogen, a metal stirrer, and a short distillation column. The flask is heated at 240°C for about 1 hour, at 260°C for about 1/2 hour, and a vacuum of 0.5 millimeters (mm) is gradually applied over the next 5 minutes. Full vacuum is maintained for about 1 hour. A high melt viscosity, white crystalline polymer is obtained with an I.V. of 1.30 and a melting endotherm measured by Differential Scanning Calorimetry (DSC) at 217°C.

EXAMPLE 2

A polyester is prepared to an I.V. of 1.25 similar to that of Example 1, ground, and solid-state polymerized by heating 1 hour at 110°C and then for 4 hours at 210°C to give a polymer with an I.V. of 2.26.

EXAMPLE 3

This example illustrates the extrusion and film stretching of PET 7352 (I.V. = 0.85) obtained from Eastman Chemicals Products, Inc.

PET 7352 is extruded into film at 280°C and stretched 4X by 4X or 300% on the T.M. Long film stretcher. The biaxially oriented film has an oxygen permeability of 6.1 cc-mil/100 in$^2$-24 hr-atm and a carbon dioxide permeability of 31.5 cc-mil/100 in$^2$-24 hr-atm.

EXAMPLE 4

This example illustrates the extrusion and film stretching of a 70/30 wt./wt. blend of PET 7352 and (BDA) (DEG) polyester. A polymer of BDA and diethylene glycol is prepared according to the procedure of Example 1, ground to pass a 3-mm screen, and dry blended with 70 weight % PET 7352 (I.V. = 0.85, Eastman Chemicals Products, Inc.). The blend is extruded and pelletized, and then extruded into film, and subsequently biaxially oriented 3X by 3X or 200% on a T.M. Long film stretcher at 100°C. The oriented film has an oxygen permeability of 3.2 cc-mil/100 in$^2$ 24 hr-atm and a carbon dioxide permeability of 16.2 cc-mil/100 in$^2$ 24 hr-atm.

The other polyesters and blends shown in Tables 1 and 2 are prepared according to procedures similar to those described in Examples 1 and 2 above.

Table 1

| Gas Barrier Properties of Films of PET/(BDA)(HD) Polyester/Polyester Blends | | | | | |
|---|---|---|---|---|---|
| | | Gas Permeability, cc-mil/24 hr-atm | | | |
| | | PO2 | | PCO2 | |
| PET 7352 Content, wt. % | (BDA)(HD) Content, wt. % | Ext. | Oriented | Ext. | Oriented |
| 100 (control)[a] | 0 | 12.4 | 6.1 | 65.3 | 31.4 |
| 99[a] | 1 | 13.7 | 6.1 | - | 36.5 |
| 95[a] | 5 | 13.2 | 7.9 | 54.8 | 30.3 |
| 90[a] | 10 | 12.3 | 6.6 | 50.6 | 29.7 |
| 80[a] | 20 | 10.7 | 5.8 | 57.3 | - |
| 70[b] | 30 | 8.1 | 5.1 | 37.3 | 24.8 |
| 50[c] | 50 | 6.9 | - | - | - |

[a] These films were biaxially oriented 300% on a T.M. Long Film Stretcher at 100°C.
[b] These films were biaxially oriented 200% on a T.M. Long Film Stretcher at 100°C.
[c] This film could not be biaxially oriented at 100°C and was too brittle.
Codes:
PO2 = oxygen permeability,
PCO2 = carbon dioxide permeability,
BDA = 4,4'-biphenyldicarboxylic acid, and
HD = 1,6-hexanediol.

Table 2

| Gas Barrier Properties of Films of PET/(BDA)(DEG) Polyester/Polyester Blends | | | | | |
|---|---|---|---|---|---|
| | | Gas Permeability, cc-mil/100 in² 24 hr-atm | | | |
| | | PO2 | | PCO2 | |
| PET 7352 Content, wt. % | (BDA)(DEG) Content, wt. % | Ext. | Oriented | Ext. | Oriented |
| 100 (control)[a] | 0 | 12.4 | 6.1 | 65.3 | 31.4 |
| 99[a] | 1 | 10.8 | 7.2 | 41.9, 54.6 | 30.8 |
| 95[a] | 5 | 10.8 | 5.8 | 52.0 | 28.8 |
| 90[a] | 10 | 10.0 | 4.9 | 45.7 | 29.5 |
| 80[a] | 20 | 8.7 | 3.7 | 42.0 | 22.8 |
| 70[b] | 30 | 6.9 | 3.2 | 27.7 | 16.2 |
| 70[a,c] | 30 | 7.3 | 3.2 | 28.6 | 18.4 |
| 50[b] | 50 | 4.0 | 2.3 | 11.6 | 16.5 |
| 30[d] | 70 | - | - | - | - |

[a] These films were biaxially oriented 300% on a T.M. Long Film Stretcher at 100° C.
[b] These films were biaxially oriented 200% on a T.M. Long Film Stretcher at 100° C.
[c] The PET used in this blend is PET 10388 (I.V. = 1.12) obtained from Eastman Chemicals Products, Inc. Kingsport, Tennessee.
[d] This film could not be biaxially oriented at 100° C.

Codes:
PO2 = oxygen permeability,
PCO2 = carbon dioxide permeability,
BDA = 4,4′-biphenyldicarboxylic acid, and
DEG = diethylene glycol.

The invention has been described in detail with particular reference to preferred embodiments thereof, but it will be understood that variations and modifications can be effected within the spirit and scope of the invention.

**Claims**

1. A polymer blend comprising

(A) about 99 to about 10 weight % of poly(ethylene terephthalate) having an inherent viscosity of greater than or equal to about 0.4 determined at 25° C in 25/35/40 (wt./wt./wt.) phenol/tetrachloro-ethane/p-chlorophenol at a concentration of 0.1 g/100 mL, and

(B) about 1 to about 90 weight % of a polyester comprising repeating units of 4,4′-biphenyldicarboxylic acid and at least one non-branched, aliphatic glycol having 2 to 6 carbon atoms wherein said polyester has an inherent viscosity of greater than or equal to about 0.2 determined at 25° C in 25/35/40 (wt./wt./wt.) phenol/tetrachloro-ethane/p-chlorophenol at a concentration of 0.1 g/100 mL.

2. The polymer blend of Claim 1 wherein component (B) is a homopolyester of 4,4′-biphenyldicarboxylic acid and a glycol having 2 to 6 carbon atoms, or a copolyester of 4,4′-biphenyldicarboxylic acid and two glycols having 2 to 6 carbon atoms.

3. The polymer blend of Claim 1 wherein the weight % of component (A) is about 10 to about 90 and the weight % of component (B) is about 90 to about 10.

4. The polymer blend of Claim 1 wherein said aliphatic glycol of component (B) is 1,6-hexanediol, 1,4-butanediol, 1,3-propanediol, or 1,5-pentanediol.

5. The polymer blend of Claim 2 wherein the weight % of component (A) is about 80 to about 20 and the weight % of component (B) is about 20 to about 80.

6. The polymer blend of Claim 2 wherein the glycol component of component (B) is 1,6-hexanediol, 1,4-butanediol, 1,3-propanediol, or 1,5-pentanediol.

7. The polymer blend of Claim 1 wherein said poly(ethylene terephthalate) of component (A) is modified

6

to contain 0 to about 30 mol % of at least one first modifier which is a glycol having 2 to 16 carbon atoms, a dicarboxylic acid having up to 16 carbon atoms, or a mixture thereof, and wherein said polyester of component (B) is modified to contain 0 to about 30 mol % of a second modifier which is a different aromatic dicarboxylic acid having up to 16 carbon atoms or a mixture of said different aromatic dicarboxylic acids, provided that at least one of component (A) or component (B) is modified with greater than 0 mol % of an appropriate modifier.

8. The polymer blend of Claim 7 wherein said poly(ethylene terephthalate) of component (A) is modified with about 0 to about 20 mol % of said first modifier.

9. The polymer blend of Claim 7 wherein said polyester of component (B) is modified with about 0 to about 20 mol % of said second modifier.

10. The polymer blend of Claim 7 wherein said dicarboxylic acid of said first modifier is malonic acid, succinic acid, glutaric acid, adipic acid, pimelic acid, azelaic acid, suberic acid, sebacic acid, dodecanedicarboxylic acid, trans-4,4′-stilbenedicarboxylic acid, 2,6-naphthalenedicarboxylic acid, isophthalic acid, 2-chloroterephthalic acid, or 2,5-dichloroterephthalic acid; said glycol of said first modifier is 1,3-propanediol, 1,4-butanediol, 1,5-pentanediol, or 1,6-hexanediol, and said second modifier of component (B) is terephthalic acid, 2-chloroterephthalic acid, trans-4,4′-stilbenedicarboxylic acid, 2,6-naphthalenedicarboxylic acid, or isophthalic acid.

11. The polymer blend of Claim 1 wherein the inherent viscosity of component (A) is greater than or equal to about 0.6, and the inherent viscosity of component (B) is greater than or equal to about 0.6.

12. The polymer blend of Claim 1 in the form of an extruded film having a carbon dioxide permeability of less than or equal to 55 cc-mil/100 in$^2$-24 hours-atm.

13. The polymer blend of Claim 1 wherein the glycol component of component (B) comprises about 30 to 95 mol % 1,6-hexanediol, and about 5 to 70 mol % ethylene glycol.

14. The polymer blend of Claim 1 wherein the glycol component of component (B) comprises about 5 to 95 mol % 1,4-butanediol and 5 to 95 mol % 1,6-hexanediol.

15. The polymer blend of Claim 1 wherein said blend is capable of being biaxially oriented.

16. A polymer blend comprising

(A) about 99 to about 10 weight % of poly(ethylene terephthalate) having an inherent viscosity of greater than or equal to about 0.4 determined at 25° C in 25/35/40 (wt./wt./wt.) phenol/tetrachloro-ethane/p-chlorophenol at a concentration of 0.1 g/100 mL, and

(B) about 1 to about 90 weight % of a homopolyester comprising of repeating units of 4,4′-biphenyldicarboxylic acid, and diethylene glycol or 1,6-hexanediol, wherein said homopolyester has an inherent viscosity of greater than or equal to about 0.6 determined at 25° C in 25/35/40 (wt./wt./wt.) phenol/tetrachloro-ethane/p-chlorophenol at a concentration of 0.1 g/100 mL.

17. The polymer blend of Claim 16 wherein the polyester of component (B) is modified to contain greater than 0 and up to about 30 mol % of at least one of terephthalic acid, 2-chloroterephthalic acid, isophthalic acid, or 2,6-naphthalenedicarboxylic acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 80, no. 8, 25th February 1974, page 33, abstract no. 37881r, Columbus, Ohio, US; & JP-A-73 40 847 (TEIJIN LTD) 15-06-1973 * Whole abstract * | 1-9,15 | C 08 L 67/02 // (C 08 L 67/02 C 08 L 67:02 ) |
| X | CHEMICAL ABSTRACTS, vol. 82, no. 4, 27th January 1975, page 54, abstract no. 17814j, Columbus, Ohio, US; & JP-A-74 76 947 (TEIJIN LTD) 24-07-1974 * Whole abstract * | 1-9,15 | |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 30-03-1990 | DECOCKER L. |